# EUROPEAN PATENT APPLICATION

(11) **EP 4 517 735 A1**
(43) Date of publication of application: **05.03.2025**
(21) Application number: 24195849.5
(22) Date of filing: 22.08.2024
(51) Int. Cl.: G10H 1/00

(54) **VIDEO-AUDIO SYSTEM AND VIDEO-AUDIO INTERACTIVE METHOD**

(30) Priority: 29.08.2023 TW 112132467
(71) Applicant: Optoma Coporation, New Taipei City (TW)
(72) Inventor: Deng, Fan-Syuan, 231633 NEW TAIPEI CITY (TW)
(74) Representative: Ter Meer Steinmeister & Partner

(57) **Abstract**

A video-audio system and video-audio interactive method are provided. The video-audio system includes a displaying device, a processing device, and an audio device. The displaying device is configured to display a user interface. A handwriting pattern is input in the user interface. The processing device communicatively connect with the displaying device. The processing device is configured to generate an information of sheet music. The information of sheet music corresponds to the handwriting pattern. The audio device is communicatively coupled to the displaying device and the processing device. The user interface has a playing and controlling area. The playing and controlling area has a playing audio button. The audio device is configured to play sounds corresponding to the information of the sheet music when the playing audio button is operated.

## Description

This application claims the priority of Taiwan application serial no. 112132467, filed on August 29, 2023.

### BACKGROUND

### 1. Technical Field

The disclosure generally relates to a system and a method, particularly to a video-audio system and video-audio interactive method.

### 2. Description of Related Art

In the existing method of composing music, the music composer usually needs to record the music while playing it, working between playing the instrument and recording the sheet music. In some specific situations, in an example that of teaching music, a student is hard to immediately and quickly learn the music through sound a teacher expresses or music the teacher played while composing music.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY

It is an object of the disclosure to provide a video-audio system and an audio-video interaction method, which provides a user interface for a user to compose music, and plays sounds after the composition is completed.

The object is solved by the features of the independent claims. Preferred embodiments are given in the dependent claims.

The video-audio system of the disclosure includes a display device, a processing device, and an audio device. The display device is configured to display a user interface, and a handwriting pattern is input to the user interface. The processing device is communicatively coupled to the display device, and configured to generate an information of sheet music. The information of sheet music corresponds to the handwriting pattern. A person skilled in the art knows that the sheet music is the written system of symbols representing musical notes. The audio device is communicatively coupled to the processing device and the display device. The user interface has a playing and controlling area. The playing and controlling area has a play audio button. When the play audio button is operated, the audio device is configured to play sound corresponding to the information of sheet music.

In some embodiments, the display device may be configured to execute a first application, to capture an input image including the handwriting pattern, the processing device, in response to receiving the input image provided by the display device, may be configured to identify the input image, to generate the information of sheet music, the information of sheet music has note information which the handwriting pattern corresponds to, and transmit the information of sheet music to the display device.

In some embodiments, the video-audio system may further include a server. The server may be communicatively coupled to the display device. The processing device may be disposed in the server.

In some embodiments, the user interface may have a recognizing area. The recognizing area may display a staff pattern, record a relative positional relationship between the handwriting pattern and the staff pattern through the first application. The input image may include the handwriting pattern and the staff pattern.

In some embodiments, the processing device may identify the relative positional relationship between the staff pattern and the handwriting pattern in the input image by executing an artificial intelligence algorithm program, to determine the note information.

In some embodiments, the processing device further may identify the information of sheet music and may convert the information of sheet music into an audio file by executing a sheet music recognition and conversion program, wherein the audio file may comprise at least one of frequency information and intensity information of a plurality of audio waves.

In some embodiments, the playing and controlling area in the user interface may have a list for selecting an instrument, configured to select a timbre of the selected instrument.

In some embodiments, the audio device further may play the sound corresponding to the information of sheet music according to the timbre of the selected instrument.

The audio-video interaction method of the disclosure may be applied to a video-audio system.

In another aspect, an audio-video interaction method is provided. The audio-video interaction method may include: inputting a handwriting pattern on a user interface; operating a play audio button on the user interface; generating an information of sheet music, the information of sheet music corresponding to the handwriting pattern; and playing sound corresponding to the information of sheet music.

In some embodiments, a first application may be executed, by a display device of the video-audio system to capture an input image includes the handwriting pattern, the input image may be identified by the processing device to generate the information of sheet music in response to the processing device receiving the input image provided by the display device, the information of sheet music may have a note information which the handwriting pattern corresponds to, and the information of sheet music may be transmitted to the display device.

In some embodiments, the audio-video interaction method may further include: displaying a staff pattern in a recognizing area of the user interface; and recording, by the first application, a relative positional relationship between the handwriting pattern and the staff pattern, wherein the input image may include the handwriting pattern and the staff pattern.

In some embodiments, the relative positional relationship between the staff pattern and the handwriting pattern in the input image may be identified by the processing device executing an artificial intelligence algorithm program, to determine the note information.

In some embodiments, the audio-video interaction method may further include: executing, by the processing device, a sheet music recognition and conversion program to recognize the information of sheet music and convert the information of sheet music into an audio file, wherein the audio file comprises at least one of frequency information and intensity information of a plurality of audio waves.

In some embodiments, the audio-video interaction method may further include: providing, by the display device, a playing and controlling area in the user interface, and displaying the play audio button and an instrument button for selecting an instrument in the playing and controlling area, for selecting a timbre of the selected instrument.

In some embodiments, the audio-video interaction method may further include: playing, by the audio device, the sound corresponding to the information of sheet music according to the timbre of the selected instrument.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
Fig. 1A is a block diagram of a video-audio system of an embodiment of the present disclosure.
Fig. 1B is a block diagram of a video-audio system of an embodiment of the present disclosure.
Fig. 2 is a time diagram of a video-audio system of an embodiment of the present disclosure.
Fig. 3 is a layout diagram of a user interface of an embodiment of the present disclosure.
Fig. 4 is a flow chart of an audio-video interaction method of an embodiment of the disclosure.

### DESCRIPTION OF THE EMBODIMENTS

It is to be understood that other embodiment may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings.

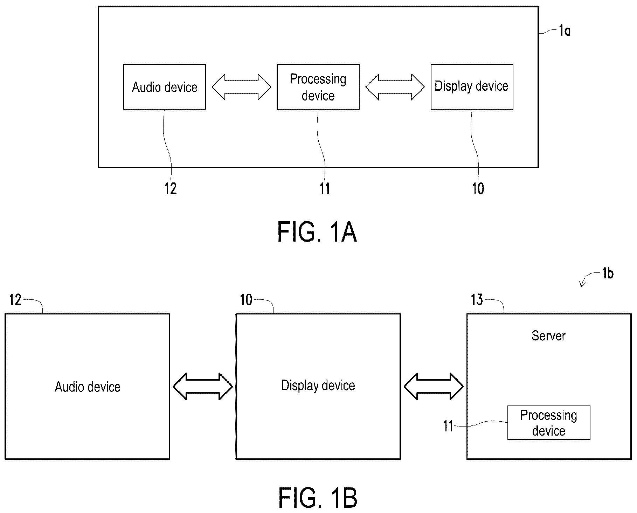

Fig. 1A is a block diagram of a video-audio system 1a according to an embodiment of the present disclosure. The video-audio system 1a includes a display device 10, a processing device 11 and an audio device 12. The display device 10, the processing device 11, and the audio device 12 are communicatively coupled. The display device 10 may be used to display a user interface, and the video-audio system 1a is configured to execute a first application, and a user operates the display image of the user interface to generate an input image, where the input image has a handwriting pattern. The writing pattern has at least one note drawn by the user operating the input device. The processing device 11 may, in response to receiving the input image provided by the display device 10, perform an image recognition on the input image to generate an information of sheet music, where the information of sheet music has a note information corresponding to the handwriting pattern. The audio device 12, in response to receiving the information of sheet music, may play sounds corresponding to the information of sheet music.

Generally speaking, the video-audio system 1a may be, for example, a display with an audio function. The display device 10, the processing device 11, and the audio device 12 may be, for example, integrated together and disposed in the display. The video-audio system 1a may execute the first application. The display device 10 may receive the handwriting pattern generated from the user's operation. Through the first application, the display device 10 may convert the received handwriting pattern into the input image, and provide it to the processing device 11 for image analysis. The processing device 11 may perform image recognition on the input image, to identify the handwriting pattern input by the user into at least one note, and convert the recognition result into the information of sheet music. Consequently, the information of sheet music may be provided to the audio device 12 by the processing device, allowing the audio device 12 to play the sound according to the information of sheet music. In this way, the user may simply operate the audiovisual system 1a to compose music by hand or other input devices on the display device 10, and convert the recognition result into a note information through processing and recognition performed on the image by the processing device 11. A melody corresponding to the note information composed on the display device 10 may be immediately heard from the audio device 12, thus effectively improving the convenience and accuracy of the arrangement process.

The display device 10 may be, for example, a panel with a touch function. The panel may be, for example, a liquid crystal panel (LCD) or a light emitting diode (LED) panel, and is used to generate an image. The input device operated by a user provides an operating signal to the display device 10. The input device is, for example, a mouse, a keyboard, a stylus, etc. In other embodiments, the operating signal is provided by the user's finger touching the display device.

The processing device 11 comprises at least one processor. The processor may be, for example, a central processing unit (CPU), or other general or specific application of programmable micro control unit (MCU), a microprocessor, a digital signal processor (DSP), a programmable controller, an application specific integrated circuit (ASIC), a graphics processing unit (GPU), or an arithmetic logic unit (ALU), a complex programmable logic device (CPLD), a field programmable gate array (FPGA), or any other kinds of integrated circuits, state machine, advanced RISC machine (ARM), or other similar components, circuits, or combinations of the above components. Further, the processing device 11 may be designed and implemented, for example, through a hardware description language (HDL) or any other digital circuit design method well known to those skilled in the art.

In such embodiment, the processing device 11 of the video-audio system 1a is configured to execute the first application.

The audio device 12 may be, for example, a speaker. The speaker may be a Bluetooth speaker or a wire connected speaker.

In an embodiment, the display device 10 may be configured to display the user interface. The user operates the user interface on the input device, wherein the user interface may include a recognizing area and a playing and controlling area. The recognizing area may display a staff pattern, allowing the user to write the composed notes in the recognition area by hand or other input devices as a handwriting pattern. Through the first application, the display device 10 will identify the display image and capture the display image to generate the input image, recording a relative positional relationship between the handwriting pattern on the staff pattern. The display image includes the staff pattern and the handwriting pattern input by the user. The display device 10 may also provide the input image to the processing device 11.

In addition, the above-mentioned sheet music with the staff pattern displayed by the display device 10 should be understood as one of the several implementations of the video-audio system 1a, and a form of the sheet music provided by the video-audio system 1a to user is not limited to the staff music. According to different user requirements, the video-audio system 1a may of course provide different forms of sheet music (such as simplified notation, guitar tab, drum tab, etc.) for users to compose music, which all should belong within the scope of the variant embodiments of the video-audio system 1a.

In some embodiments, the processing device 11 may be equipped with an image recognition function and a sheet music recognition and conversion function. The processing device 11 may receive an input image provided by the display device 10 and recognize the input image using the image recognition function and convert it into the information of sheet music. Then, the information of sheet music is converted into an audio file of a preset format using the sheet music recognition and conversion function, so that the audio device 12 of the video-audio system 1a may perform play music subsequent. In some embodiments, the processing device 11 is used to execute an artificial intelligence algorithm program to recognize the handwriting pattern in the input image and convert it into information of sheet music containing note information, which is the image recognition function. The artificial intelligence algorithm program is, for example, an optical character recognition (OCR) application, a digital ink recognition application, or other handwriting pattern recognition applications known to those in the field. In other words, the function of the handwriting pattern recognition applications is to recognize images with handwriting and convert them into the information of sheet music. Then, identification on the information of sheet music may be performed using the sheet music recognition and conversion program to obtain the audio file containing frequency information and intensity information of each one of the plurality of audio waves. The frequency information includes a plurality of frequencies. In other words, the audio file comprises at least one of frequency information and intensity information of a plurality of audio waves. For example, the video-audio system 1a/1b comprises at least one storage device. The processing device 11 is electronically connected to the at least one storage device (not illustrated), which may include, for example, a dynamic random access memory (DRAM), or a flash memory, or a non-volatile memory. Random Access Memory (NVRAM), etc. In an embodiment, the artificial intelligence algorithm program has an image recognition model, and the storage device may store the trained image recognition model to identify and convert the handwriting pattern in the input image into the note information. For example, the image recognition model may be, for example, a trained deep learning or reinforcement learning model, which may be, for example, an area-based convolutional neural network (RCNN) series (e.g., RCNN, Fast RCNN, Mask RCNN and Faster RCNN), SSD and YOLO (You only look once, YOLO) series (for example, YOLO, YOLOv2, YOLO 9000 and YOLOv3) and other models, and trained based on classified or labeled datasets or training sets. Therefore, the processing device 11 may perform handwriting pattern recognition on the input image by executing the image recognition model, to recognize at least one note corresponding to the handwriting pattern, and to determine at least one scale of the at least one note according to a position of the handwriting pattern on the staff pattern, to further obtain the note information corresponding to the handwriting pattern. Further, the processing device 11 may also execute the sheet music recognition and conversion program, such as an optical music recognition (OMR) application to recognize the information of sheet music, and convert the information of sheet music into the audio file of a specific format. For example, the processing device 11 may execute the optical sheet music recognition application to identify the information of sheet music and convert it into a frequency information of an audio wave to be played and an intensity information of each frequency, and then convert the audio wave information into the audio file of a preset format. For example, the audio file may be a midi file, mp3 file, wav file, aif file, or other suitable and similar music or audio files.

At last, the processing device 11 may provide the converted audio file to the audio device 12 for that the audio device 12 to play the sound.

In this way, the user may simply compose music by operating the user interface displayed on the display device 10, and directly listen to the music he or she composed right after the composition is completed, providing the user with a direct audio response to improve convenience of video-audio system 1a.

Fig. 1B is a block diagram of a video-audio system 1b according to an embodiment of the present disclosure. The video-audio system 1b in Fig. 1B is similar to the video-audio system 1a in Fig. 1A, so the same components are represented by the same symbols, and please refer to paragraphs in the above for its detailed operations, which is not repeated herein.

The difference between the video-audio system 1b in Fig. 1B and the video-audio system 1a in Fig. 1A is that the video-audio system 1a may be, for example, an integrated device that integrates the display device 10, the processing device 11 and the audio device 12, and the video-audio system 1b may be, for example, a decentralized video-audio system. The devices in the video-audio system may be dispersedly installed at different locations in the space, and operations of the video-audio system may be coordinated through wired or wireless network connections. Specifically, the video-audio system 1b includes the display device 10, the audio device 12 and a server 13 including the processing device 11. The display device 10, the audio device 12, and the server 13 including the processing device 11 are communicatively coupled to each other. The display device 10 also includes a processor, which may be configured to execute the first application to obtain the input image. Then, the input image may be provided to the server 13 including the processing device 11, so that the server 13 executes the artificial intelligence algorithm program to identify the input image and convert the handwriting pattern on it into the information of sheet music including the note information. Further, the sheet music recognition and conversion program is executed to convert the sheet music information into an audio file of a specific format. At last, the video-audio system 1b may provide the converted audio file to the audio device 12 to play sound. The processor of display device 10 may be equivalent to the processing device 11, and its operations is omitted herein.

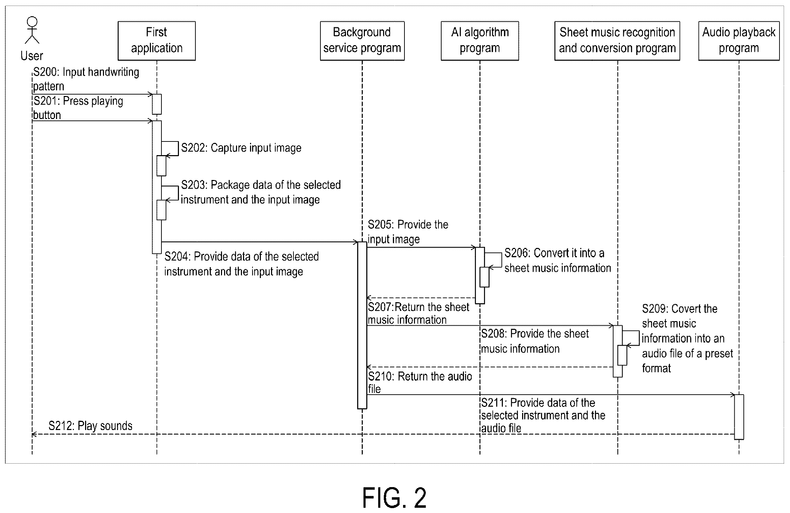

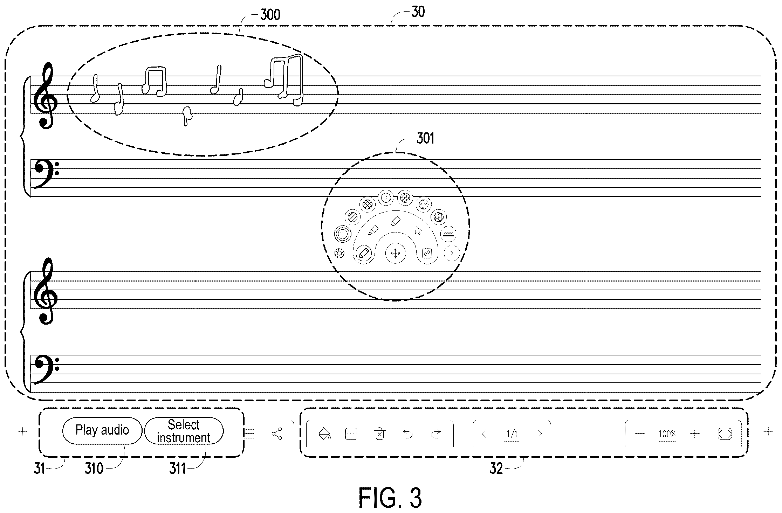

Fig. 2 is a time diagram of a video-audio system 1a/1b according to an embodiment of the present disclosure. Specifically, the operations of the video-audio system 1a/1b is summarized into steps S200~S212. Fig. 3 is a layout diagram of a user interface according to an embodiment of the present disclosure. Please refer to Fig. 2 and 3 together for better understanding the following paragraphs.

As shown in Fig. 3, the user interface includes a recognizing area 30 and a playing and controlling area 31. In some embodiments, the recognizing area 30 may include a staff pattern to for user to operate and input the handwriting pattern 300, where the staff pattern is serving as a background pattern. The staff pattern is the five lines and four spaces between them on which musical notes are written. The handwriting pattern 300 has at least one musical note. In addition, the recognition area 30 may also include a handwriting option button 301 to provide the user with different options for inputting handwriting, such as buttons of changing the handwriting color, changing the brush effect of the handwriting, changing the operating function, etc. The handwriting option button 301 may be moved on the user interface. The user interface also includes a toolbar area 32, and the staff pattern may be displayed on the recognition area 30 using one of the function buttons in the toolbar area 32.. In other embodiments, different forms of musical notation patterns (such as simplified notation, guitar notation, drum notation, etc.) may be provided through other function buttons in the toolbar area 32.

In addition to the recognizing area 30, the user interface also provides a playing and controlling area 31, which includes at least one of the play audio buttons 310 and the select instrument button 311. The user may operate the select instrument button 311 to select one or more musical instruments (such as violin, piano, etc.) from multiple available instruments, so that when the user presses the play audio button 310, the audio device 12 may play the sound according to a timbre of the selected instrument. In another embodiments, the user may choose not to operate the instrument selection button 311. When the user presses the play audio button 310, the audio device 12 will play the sound according to the timbre of a preset instrument (such as a piano).

Please Refer to Fig. 2, in step S200, the user may input a handwriting pattern on the user interface of the display device 10 through operating the input device.

In step S201, when the user presses the play audio button 310, the video-audio system 1a/1b may enter step S202. Further, in step S201, the user may also operate the select instrument button 311 on the user interface to select the instrument to be played.

In step S202, a first application is executed by the video-audio system 1a/1b to capture the input image including the staff pattern and handwriting pattern on the user interface. Specifically, the processing device 11 or the processor in the display device 10 may capture the display image of the recognizing area 30 on the user interface to generate an input image. The input image includes a relative positional relationship between the handwriting pattern 300 and the staff pattern in the background. In step S203, the processing device 11 of the video-audio system 1a or the processor of the display device 10 of the video-audio system 1b may execute the first application to package the data of the selected instrument and the input image as a first data. After that, the audio device 12 may play sound according to the timbre of the selected instrument indicated in the first data. The so-called data of the selected instrument refers to the specific parameters of the instrument such as timbre, audio frequency, etc., which allows the user to easily know which instrument produces the sound effect.

In step S204, the first data having the input image and the data of the selected musical instrument is provided to a background service program executed by the processing device 11 of the video-audio system 1a or the processor of the display device 10 of the video-audio system 1b.

In step S205, the processor of the processing device 11 of the video-audio system 1a or the display device 10 of the video-audio system 1b executes the background service program, to provide the input image in the first data, without the data of the selected instrument.

In step S206, the processing device 11 of the video-audio system 1a/1b executes an artificial intelligence algorithm program to identify the input image, and then converts the handwriting pattern of the input image into the information of sheet music.

In step S207, the information of sheet music is returned/transmitted to the background service program.

In step S208, the background service program provides the information of sheet music.

Then, in step S209, the processing device 11 of the video-audio system 1a/1b may execute the sheet music recognition and conversion program to recognize the sheet music information. And the processing device 11 of the video-audio system 1a/1b may execute the sheet music recognition and conversion program to convert the information of sheet music into an audio file of a preset format. For example, the processing device 11 of the video-audio system 1a/1b may convert the information of sheet music into the audio file, such as a midi file, using the sheet music recognition and conversion program. In step S210, the audio file audio file may be returned /transmitted to the background service program.

Although the processing device 11 with a single structure is illustrated in the embodiments of the video-audio systems 1a and 1b in Fig. 1A and 1B, the processing device 11 may also be of a separated structure and be used to execute background service program, service program, artificial intelligence algorithm program and sheet music recognition and conversion program, respectively.

In step S211, the background service program transfers the audio file and the data of the selected musical instrument to an audio playback program executed by the processing device 11 of the video-audio system 1a/1b. Further, according to the data of the selected instrument, the audio playback program may read the timbre of the selected instrument from the timbres of various instruments stored in a storage device of the video-audio system 1a/1b.

In step S212, by the audio playback program, the processing device 11 of the video-audio system 1a/1b provides the audio file corresponding to the timbre of the selected instrument to the audio device 12, so that the user may immediately heard actual results of the music composed by the selected instrument.

In the embodiments above, although only the process of compose and playback of a single sheet music is described, the video-audio system 1a/1b may of course be used to play multiple sheet music at the same time. For example, a music score of the symphony includes multiple sheet music used for different instruments to play. The user may, for example, open multiple tabs on the user interface, allowing the user to write the sheet music for different instruments on each tab and select a corresponding instrument for playback, and all tabs of the sheet music may be integrated and stored as the same symphony score. The play audio button 310 may also provide the function of playing a single sheet music, multiple selected sheet music, or all sheet music. In this way, users may compose complex music in real time, and obtain auditory feedback immediately, improving convenience of video-audio system 1a/1b.

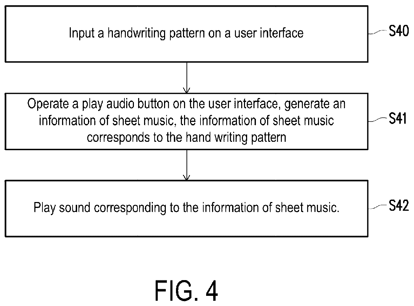

Fig. 4 is a flow chart of an audio-video interaction method according to an embodiment of the present disclosure. The audio-video interaction method in Fig. 4 may be executed by any one of the video-audio systems 1a and 1b in Fig. 1A and 1B. The audio-video interaction method in Fig. 4 includes steps S40-S42.

In step S40, the handwriting pattern 300 is input into the user interface, and the first application is executed through the video-audio system 1a/1b to capture the input image having the handwriting pattern 300. In some embodiments, in step S40, the display device 10 may display the user interface, and the handwriting pattern 300 is input on the user interface. Further, by executing the first application, the handwriting pattern 300 input by the user in the recognition area 30 of the user interface is captured to generate an input image. The input image includes a handwriting pattern 300 and a staff pattern, and records the relative positional relationship between the staff pattern and the handwriting pattern. In some embodiments, the user interface may also provide a playing and controlling area 31, and the user may select the instrument to play the sound by operating the select instrument button 311 in the playing and controlling area 31, and play the sound of the composed music by operating the play audio button 310 in the playing and controlling area 31.

In step S41, the play audio button on the user interface is pressed to generate the information of sheet music corresponding to the handwriting pattern. Further, in response to receiving the input image provided by the display device 10, the processing device 11 may identify the input image and convert it into the information of sheet music, wherein the information of sheet music records the note information corresponding to the handwriting pattern 300. The processing device 11 is communicatively coupled to the display device 10, and is used to generate the information of sheet music. The information of sheet music corresponds to the handwriting pattern 300. In some embodiments, the processing device 11 may execute an artificial intelligence algorithm program to identify the input image, and convert the handwriting pattern in the input image into the information of sheet including the note information. Specifically, the processing device 11 may perform image recognition using the artificial intelligence algorithm program to recognize the handwriting pattern 300 as at least one note corresponding to it. Further, the processing device 11 may perform image recognition according to a relative position difference between the handwriting pattern and the staff pattern to identify scale of at least one note, so the note information corresponding to the handwriting pattern 300 may be obtained, and the note information may be stored as the information of sheet music.

In some embodiments, the processing device 11 may also recognize the information of sheet music through a sheet music recognition and conversion program, and convert the information of sheet music into an audio file of a preset format. For example, the processing device 11 may use the OMR to convert the information of sheet music into a frequency information of an audio wave to be played and an intensity information of each frequency, and then the information of the audio wave may be stored as an audio file of the preset format. For example, audio file may be, for example, a midi file, an mp3 file, a wav file, an aif file, or other suitable and similar music or audio files.

In step S42, the video-audio system 1a/1b may play the sound corresponding to the information of sheet music by the audio device 12. In other words, the audio device 12 is communicatively coupled to the processing device, wherein the user interface has a playing and controlling area. 31. The playing and controlling area 31 has a play audio button 310. When the play audio button 310 is pressed, the audio device 12 is used to play the sound corresponding to the information of sheet music. In this way, the user may simply operate the display device 10 to compose music, and after composing the music, one may directly listen to the composed music, providing users with direct auditory response and improving convenience of video-audio system 1a.

In summary, the video-audio system of the embodiment of the present disclosure may provide the user with a simple and direct visual operating interface by executing the user interface displayed by the first application. The user may simply operate the user interface displayed on the display device to compose music, and music feedback is provided after the composition is completed, so that users may get quick and correct responses when composing music, improving convenience of video-audio system 1a.

In the embodiments above, the first application, the background service program, the artificial intelligence algorithm program, the OCR program, the Digital Ink Recognition application, the image recognition model, the optical music score recognition program, and the sheet music recognition and conversion program all belong to software. The above software may be stored in the at least one storage device, and may be executed or stored by a processing device or at least one processor.

In the conventional display devices, the technical problem that a student may not immediately and quickly know what the melody or sound that the user wants to express is or how the sound is like when played by a musical instrument when composing music may be solved by embodiments of the present disclosure. Users may easily compose music using the video-audio system and audio-video interaction method, and immediately listen to the music he or she composed right after the composition is completed, providing direct auditory response and improving convenience and accuracy of composing music.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A video-audio system, comprising:
a display device (10), configured to display a user interface, wherein a handwriting pattern (300) is input to the user interface;
a processing device (11), communicatively coupled to the display device (10), configured to generate an information of sheet music, wherein the information of sheet music corresponds to the handwriting pattern (300); and
an audio device (12), communicatively coupled to the processing device (11) and the display device (10), wherein the user interface has a playing and controlling area (31), the playing and controlling area (31) has a play audio button (310), when the play audio button (31) is operated, the audio device (12) is configured to play sound corresponding to the information of sheet music.

2. The video-audio system of claim 1, wherein the display device (10) is configured to execute a first application, to capture an input image comprising the handwriting pattern (300), and the processing device (11), in response to receiving the input image provided by the display device (10), is configured to identify the input image, to generate the information of sheet music, wherein the information of sheet music comprises note information which the handwriting pattern (300) corresponds to, and the processing device (11) is configured to transmit the information of sheet music to the display device (10).

3. The video-audio system of claim 1 or 2, further comprising a server (13), the server (13) being communicatively coupled to the display device (10), wherein the processing device (1) is disposed in the server (13).

4. The video-audio system of claim 2 or 3, wherein the user interface comprises a recognizing area (30), the recognizing area (30) is configured to display a staff pattern, the processing device (11) is configured to record a relative positional relationship between the handwriting pattern (300) and the staff pattern through the first application, the input image comprises the handwriting pattern (300) and the staff pattern.

5. The video-audio system of claim 4, wherein the processing device (11) is configured to identify the relative positional relationship between the staff pattern and the handwriting pattern (300) in the input image by executing an artificial intelligence algorithm program, to determine the note information.

6. The video-audio system of claim 5, wherein the processing device (11) is configured to further identify the information of sheet music and convert the information of sheet music into an audio file by executing a sheet music recognition and conversion program, wherein the audio file comprises at least one of frequency information and intensity information of a plurality of audio waves.

7. The video-audio system of any one of the preceding claims, wherein the playing and controlling area (31) in the user interface comprises an instrument button (311) for selecting an instrument for selecting a timbre of the selected instrument.

8. The video-audio system of claim 7, wherein the audio device (12) is configured to further play the sound corresponding to the information of sheet music according to the timbre of the selected instrument.

9. An audio-video interaction method, applied to a video-audio system, the audio-video interaction method comprising:
inputting (S40) a handwriting pattern (300) on a user interface;
operating a play audio button (S41) on the user interface;
generating (S41) an information of sheet music, the information of sheet music corresponding to the handwriting pattern (300); and
playing (S42) sound corresponding to the information of sheet music.

10. The audio-video interaction method of claim 9, wherein a first application is executed, by a display device (10) of the video-audio system to capture an input image comprising the handwriting pattern (300), the input image is identified by a processing device (11) to generate the information of sheet music in response to the processing device (11) receiving the input image provided by the display device (10), the information of sheet music has a note information which the handwriting pattern (300) corresponds to, and the information of sheet music is transmitted to the display device (10).

11. The audio-video interaction method of claim 9 or 10, further comprising:
displaying a staff pattern in a recognizing area (30) of the user interface; and recording, by the first application, a relative positional relationship between the handwriting pattern (300) and the staff pattern, wherein the input image comprises the handwriting pattern (300) and the staff pattern.

12. The audio-video interaction method of claim 11, wherein the relative positional relationship between the staff pattern and the handwriting pattern (300) in the input image is identified by the processing device (11) executing an artificial intelligence algorithm program, to determine the note information.

13. The audio-video interaction method of claim 11 or 12, further comprising:
executing, by the processing device (11), a sheet music recognition and conversion program to recognize the information of sheet music and convert the information of sheet music into an audio file, wherein the audio file comprises at least one of frequency information and intensity information of a plurality of audio waves.

14. The audio-video interaction method of any one of the preceding claims 9-13, further comprising:
providing, by the display device (10), a playing and controlling area (31) in the user interface, and displaying the play audio button (310) and an instrument button (311) for selecting an instrument in the playing and controlling area (31), for selecting a timbre of the selected instrument.

15. The audio-video interaction method of claim 14, further comprising:
playing, by the audio device (12), the sound corresponding to the information of sheet music according to the timbre of the selected instrument.
